# EUROPÄISCHE PATENTSCHRIFT

(11) **EP 4 072 833 B1**
(45) Veröffentlichungstag und Bekanntmachung des Hinweises auf die Patenterteilung: **03.07.2024**
(21) Anmeldenummer: 20808030.9
(22) Anmeldetag: 11.11.2020
(51) Int. Cl.: B29C 65/36, B29C 65/48, B29C 65/52, B29C 65/00

(54) **VERFAHREN ZUR HERSTELLUNG EINES VERBUNDKÖRPERS UND VERBUNDKÖRPER**
METHOD FOR PRODUCING A COMPOSITE BODY, AND COMPOSITE BODY
PROCÉDÉ DE PRODUCTION D'UN CORPS COMPOSITE, ET CORPS COMPOSITE

(30) Priorität: 10.12.2019 DE 102019133748
(43) Veröffentlichungstag der Anmeldung: 19.10.2022
(73) Patentinhaber: Deutsches Zentrum für Luft- und Raumfahrt e.V., 53227 Bonn (DE)
(72) Erfinder: KADEN, Markus, 70372 Stuttgart (DE); SCHNEIDER, Marvin, 71083 Herrenberg (DE)
(74) Vertreter: RPK Patentanwälte Reinhardt und Kaufmann Partnerschaft mbB
(86) Internationale Anmeldenummer: PCT/EP2020/081807
(87) Internationale Veröffentlichungsnummer: WO 2021/115713

(56) Entgegenhaltungen:
- EP-A1- 3 257 912
- DE-A1-102013 111 266
- DE-A1-102018 117 295
- JP-A- H 037 327
- US-A- 3 620 875
- US-A1- 2004 099 659
- US-A1- 2016 284 449

## Beschreibung

### Stand der Technik

Die Erfindung betrifft ein Verfahren zur Herstellung eines Verbundkörpers aus wenigstens zwei thermoplastischen Fügepartnern, die an wenigstens einer Kontaktfläche materialschlüssig miteinander verbunden werden.

Es ist bekannt, Fügepartner aus Kunststoff mittels induktiver Erwärmung zusammenzufügen. Ein solches Verfahren ist aus der US 10058950B1 bekannt. Hierzu werden die Fügepartner zwischen zwei Induktionsspulen angeordnet. Zu beiden Seiten eines Fügepartners werden zwei Deckschichten angeordnet und zwischen Deckschicht und Fügepartner jeweils eine thermoplastische Schicht, in welche ein Metallnetz eingebettet ist. Die thermoplastische Schicht wird mit einem magnetischen Wechselfeld beaufschlagt. Durch die dabei induzierten Wirbelströme erhitzt sich das Metallnetz und schmilzt, wodurch die Fügepartner miteinander verbunden werden können. Die Schicht weist eine Dicke von wenigen hundert Mikrometern auf. Das Metallnetz kann beispielsweise aus einer Nickellegierung gebildet sein.

Aus der US 3620875 A ist ein Verfahren bekannt, bei dem zum Verbinden von Abschnitten aus thermoplastischem Material eine Zwischenlage einer dünnen Bindeschicht aus gleichartigem thermoplastischem Material eingelegt wird, in der gleichmäßig dispergierte ferromagnetische Teilchen vorhanden sind. Die Teilchen werden bei Anlegen eines induzierten elektromagnetischen Feldes durch Hysterese- und Wirbelstromeffekte schnell auf eine Temperatur oberhalb der Curie-Temperatur der Teilchen erhitzt. Hierdurch werden die thermoplastischen Materialien der Verbindungsschicht und die thermoplastischen Abschnitte über ihre Schmelzpunkte erwärmt, und es bildet sich eine hochfeste strukturelle Verbindung zwischen den Abschnitten.

### Offenbarung der Erfindung

Die Aufgabe der Erfindung ist, ein verbessertes Fügeverfahren zum Verbinden von thermoplastischen Kunststoffen zu schaffen.

Eine weitere Aufgabe der Erfindung ist die Schaffung eines Verbundkörpers aus einem thermoplastischen Kunststoff.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Es wird ein Verfahren zur Herstellung eines Verbundkörpers aus wenigstens zwei thermoplastischen Fügepartnern vorgeschlagen. Die wenigstens zwei thermoplastischen Fügepartner werden an wenigstens einer Kontaktfläche materialschlüssig miteinander verbunden. Das Verfahren umfasst die Schritte (i) Anbringen eines induktiv aufheizbaren Schweißhilfselements auf eine äußere oder innere Oberfläche wenigstens eines der Fügepartner im Bereich der Kontaktfläche, wobei das Schweißhilfselement mit einem additiven Verfahren auf die Oberfläche aufgebracht wird; (ii) Zusammenführen der wenigstens zwei Fügepartner an der Kontaktfläche; (iii) induktives Erwärmen der Kontaktfläche mit Hilfe des Schweißhilfselements zum zumindest teilweisen Aufschmelzen der Kontaktfläche; (iv) Erstarren der Schmelze zum Herstellen der materialschlüssigen Verbindung zwischen den wenigstens zwei Fügepartnern.

Eine Schweißtemperatur zum Verbinden der wenigstens zwei thermoplastischen Fügepartner wird mittels einer Curietemperatur von ferromagnetischen Partikeln eingestellt, welche in dem Schweißhilfselement enthalten sind.

Wenigstens einer der Fügepartner wird mit einem additiven Verfahren schichtweise gebildet und das Schweißhilfselement während des Aufbaus dieses Fügepartners auf den Fügepartner aufgebracht und mit weiterem Material des Fügepartners bedeckt.

Bei einem additiven Verfahren, wie dem 3D-Druckverfahren, wird ein Körper schichtweise aufgebaut. Ein solches Verfahren erlaubt es, beim Erzeugen einer Schicht eines Körpers lokal unterschiedliche Materialien aufzubringen.

Das Schweißhilfselement wird aus einer Masse von induktiv erhitzbaren ferromagnetischen Partikeln in einer thermoplastischen Matrix gebildet. Die Partikeln können vorteilhaft einen Gehalt an induktiv aufheizbaren ferromagnetischen Partikeln in der Masse von mindestens 1 Gewichtsprozent und höchstens 25 Gewichtsprozent aufweisen.

Dadurch, dass die Schweißtemperatur zum Verbinden der wenigstens zwei thermoplastischen Fügepartner mittels der Curietemperatur des ferromagnetischen Materials eingestellt wird, kann eine günstige Prozessführung bei der Herstellung des Verbundkörpers mit einer einfachen Temperaturkontrolle erfolgen.

Zusätzlich können Partikel aus Kohlefasermaterial oder einem sonstigen elektrisch leitfähigem Materialgebildet in der Masse enthalten sein. Vorzugsweise ist die Partikelgröße klein genug, um eine Passage durch eine Druckdüse beim 3D-Druckverfahren zu ermöglichen. Vorteilhaft sind Durchmesser oder Kantenlängen von beispielsweise wenigen hundert Mikrometern.

Vorteilhaft wird durch das additive Aufbringen eine innige Verbindung des Schweißhilfselements mit dem jeweiligen Fügepartner hergestellt. Insbesondere kann das Schweißhilfselement materialschlüssig aufgebracht werden. Ungünstige Materialpaarungen können vermieden werden, welche die Kontaktstelle zwischen den Fügepartnern schwächen könnten. Das Schweißhilfselement kann an einer oder mehreren Stellen lokal begrenzt aufgebracht sein. Dies erlaubt eine Fertigung von komplex geformten Verbundkörpern.

Vorteilhaft sind die Fügepartner aus Faserverbundmaterial gebildet.

Darüber hinaus kann durch das lokale begrenzte Aufbringen des Schweißhilfsmittels anstelle eines Metallnetzes vermieden werden, dass bei Temperaturschwankungen aufgrund der unterschiedlichen Wärmeausdehnungen Spannungen im Verbundkörper entstehen, die im schlimmsten Fall zum Versagen der Struktur führen können.

Günstigerweise weist das Schweißhilfselement induktiv aufheizbare Partikel in einer thermoplastischen Matrix auf, beispielsweise ferromagnetische Partikel oder eine Mischung aus ferromagnetischen Partikeln mit Kohlefaserabschnitten in einer thermoplastischen Matrix.

Durch die ferromagnetischen Partikel in der thermoplastischen Matrix kann eine schnelle Erwärmung des Schweißhilfselements erreicht werden, wenn ein magnetisches Wechselfeld auf die ferromagnetischen Partikel einwirkt.

Wird die Curie-Temperatur der ferromagnetischen Partikel erreicht oder überschritten, sinkt der Energieeintrag in die Partikel deutlich, da diese oberhalb der Curietemperatur ihre ferromagnetischen Eigenschaften verlieren und weniger Energie aus dem Induktionsfeld aufnehmen können. Da die Partikel nicht miteinander verbunden sein müssen, wird das Gefüge der Schweißverbindung nur geringfügig durch das Schweißhilfselement beeinflusst.

Das Schweißhilfselement wird mittels eines magnetischen Wechselfelds aufgeheizt, wobei das thermoplastische Material des Schweißhilfselements und der Fügepartner im Bereich der Kontaktfläche schmilzt.

Vorteilhaft kann das additive Verfahren ein 3D-Druckverfahren sein, zum Beispiel ein FDM-Druckverfahren. FDM steht für "Fused Deposition Modeling", d.h. ein Werkstück wird schichtweise aus einem schmelzfähigen Kunststoff oder aus geschmolzenem Material, beispielsweise Metall, aufgebaut. Bei einem solchen additiven Verfahren wird ein Körper schichtweise aufgebaut. Dies erlaubt die Erzeugung komplexer Geometrien. Ein nur lokales Aufbringen des Schweißhilfselements lässt sich auf diese Weise einfach realisieren. Ferner kann das Schweißhilfselement entsprechend der zu fügenden Kontur auf den Fügepartner aufgebracht werden.

Es können lokal selektiv Kontaktstellen erzeugt werden, welche das Schweißhilfselement aufweisen. Eine ganzflächige Ausbildung des Schweißhilfselements ist nicht notwendig, wenn nicht gewünscht.

Wird das Schweißhilfselement auf einer inneren Schicht des Fügepartners aufgebracht, während dieser mit einem additiven Verfahren hergestellt wird, bildet das Schweißhilfselement einen vergrabenen Bereich in diesem Fügepartner. Es können mehrere Schweißhilfselemente vorgesehen sein, die an unterschiedlichen Orten und/oder in unterschiedlicher Tiefe im Fügepartner angeordnet sein können. Zweckmäßigerweise kann dieser Bereich oder können diese Bereiche oberflächennah angeordnet sein.

Nach einer günstigen Ausgestaltung kann das Schweißhilfselement als Schmelze auf die Oberfläche aufgebracht werden, das Schweißhilfselement bildet einen innigen Verbund mit dem Fügepartner.

Nach einer günstigen Ausgestaltung kann das Schweißhilfselement als Filament für einen 3D-Druckvorgang bereitgestellt werden. Alternativ kann das Schweißhilfselement in einem 3D-Druckverfahren aus Granulat hergestellt werden oder einem sonstigen, für den 3D-Druck geeigneten Ausgangsform des Materials. Das Filament kann vorzugswiese aus ferromagnetischen Partikeln in einer thermoplastischen Matrix gebildet werden. Alternativ können die Partikel aus Kohlefaser gebildet sein. Hierdurch kann das Schweißhilfselement besonders einfach mit einem additiven Verfahren, insbesondere 3D-Druck, appliziert werden. Die Partikelgröße kann leicht an die verfügbaren Düsendurchmesser im 3D-Druckverfahren angepasst werden. Durch die Partikel in der thermoplastischen Matrix weist das Filament eine Temperatur auf, bis zu der die Partikel bei Einwirken eines magnetischen Wechselfelds Energie aufnehmen und die thermoplastische Matrix und das angrenzende Material des oder der Fügepartner aufschmelzen können.

Die Masse kann einen Gehalt an induktiv aufheizbaren Partikeln in der Masse von mindestens 1 Gewichtsprozent und höchstens 25 Gewichtsprozent, vorzugsweise höchstens 20 Gewichtsprozent, aufweisen. Vorzugsweise ist die Partikelgröße klein genug, um eine Passage durch eine Druckdüse beim 3D-Druckverfahren zu ermöglichen. Vorteilhaft sind Durchmesser oder Kantenlängen von beispielsweise wenigen hundert Mikrometern.

Günstigerweise können die Partikel aus ferromagnetischem Material gebildet sein. Alternativ oder zusätzlich können die Partikel aus Kohlefasermaterial oder einem sonstigen elektrisch leitfähigem Materialgebildet sein.

Nach einer günstigen Ausgestaltung können die Fügepartner und das Schweißhilfselement das gleiche thermoplastische Material aufweisen. Günstigerweise wird eine weitgehende Materialhomogenität des Verbundkörpers erreicht, was eine weitgehende Stabilität der Verbindung zwischen den Fügepartnern sicherstellt.

Es wird vermieden, dass bei Temperaturschwankungen aufgrund der unterschiedlichen Wärmeausdehnungen Spannungen im Verbundkörper entstehen, die im schlimmsten Fall zum Versagen der Struktur führen können.

Nach einer günstigen Ausgestaltung kann das induktive Erwärmen mit einer biegeweichen Induktionsspuleneinrichtung erfolgen, die sich der Form des Fügepartners so anpasst, dass ein Abstand der Induktionsspuleneinrichtung zum Schweißhilfselement auch bei unebenen Fügekörpern weitgehend konstant gehalten werden kann Der Verbundkörper kann bzw. die Fügepartner können eine komplexe Form aufweisen. Durch den weitgehend konstant gehaltenen Abstand wird eine homogene Erwärmung des Schweißhilfselements und der Fügekörper im Bereich der materialschlüssigen Verbindung ermöglicht. Beim Schweißvorgang erhitzt sich die Induktionsspuleneinrichtung praktisch nicht, während das Schweißhilfselement aufgeheizt wird.

Ferromagnetische Partikel weisen eine Curietemperatur auf, bis zu welcher die Partikel Energie aus dem Induktionsfeld aufnehmen und sich erhitzen können. Oberhalb der Curietemperatur verlieren die Partikel ihre ferromagnetischen Eigenschaften und nehmen deutlich weniger Energie auf. Vorzugsweise liegt die Curietemperatur der ferromagnetischen Partikel im Schweißhilfselement oberhalb der Schmelztemperatur der Fügepartner im Bereich der Kontaktfläche. Dabei kann das Material der Partikel so gewählt werden, dass deren Curietemperatur nur wenig, beispielsweise nur wenige 10°C oder wenige 100°C, über dem Schmelzpunkt des thermoplastischen Materials liegt. Dies erlaubt eine gute Kontrolle der Schweißung und eine schonende Herstellung der Schweißverbindung.

Nach einer günstigen Ausgestaltung kann die Kontaktfläche, wenn sie in einem gekrümmten Bereich der Fügepartner ausgebildet wird, der Kontur des gekrümmten Bereichs folgen.

Mit einer biegeweichen Induktionsspulenvorrichtung kann auch bei einer solchen gekrümmten Schweißzone ein homogener Abstand der Spule zum Schweißhilfselement eingehalten werden.

Nach einer günstigen Ausgestaltung kann als thermoplastisches Material wenigstens eines aus der Gruppe von Polyetheretherketon (PEEK), Polyetherketonketon (PEKK), Polyphenylensulfid (PPS), Polyetherketon (PEK), Polyaryletherketon (PAEK), Polyetherimid (PEI), Polyamid (PA, PA6, PA12) verwendet werden. Vorzugsweise kann das thermoplastische Material mit Kohlefasern und/oder Glasfasern faserverstärkt ausgebildet sein.

Nach einer günstigen Ausgestaltung kann als ferromagnetisches Material der Partikel wenigstens eines aus der Gruppe von Chrom(IV)oxid, Goethit, Lepidokrokit, Ilmenit, Nickel, Magnetit, Hämatit, Eisen, Cobalt verwendet werden. Vorteilhaft liegen die Curietemperaturen der Materialien für Chrom(IV)oxid bei 113°C, für Goethit bei 120°C, für Lepidokrokit bei 196°C, für Ilmenit bei 233°C, für Nickel bei 358°C, für Magnetit bei 575°C, für Hämatit bei 680°C, für Eisen bei 768°C, für Cobalt bei 1121°C.

Nach einen weiteren Aspekt der Erfindung wird die Verwendung eines Schweißhilfselements umfassend eine thermoplastische Matrix mit darin eingebetteten induktiv aufheizbaren Partikeln, zur Durchführung eines erfindungsgemäßen Verfahrens zur Herstellung eines Verbundkörpers vorgeschlagen.

Wenigstens einer der Fügepartner wird mit einem additiven Verfahren schichtweise gebildet und das Schweißhilfselement während des Aufbaus dieses Fügepartners auf den Fügepartner aufgebracht und mit weiterem Material des Fügepartners bedeckt.

Bei einem additiven Verfahren, wie dem 3D-Druckverfahren, wird ein Körper schichtweise aufgebaut. Ein solches Verfahren erlaubt es, beim Erzeugen einer Schicht eines Körpers lokal unterschiedliche Materialien aufzubringen.

Insbesondere kann das Schweißhilfselement als Filament ausgebildet sein. Insbesondere können die Partikel aus ferromagnetischem Material und/oder Kohlefasern gebildet sein. Das Verfahren dient zur Herstellung eines Verbundkörpers aus wenigstens zwei thermoplastischen Fügepartnern. Die wenigstens zwei thermoplastischen Fügepartner werden an wenigstens einer Kontaktfläche materialschlüssig miteinander verbunden.

Das Verfahren umfasst die Schritte (i) Anbringen eines induktiv aufheizbaren Schweißhilfselements auf eine äußere oder innere Oberfläche wenigstens eines der Fügepartner im Bereich der Kontaktfläche, wobei das Schweißhilfselement mit einem additiven Verfahren auf die Oberfläche aufgebracht wird; (ii) Zusammenführen der wenigstens zwei Fügepartner an der Kontaktfläche; (iii) induktives Erwärmen der Kontaktfläche mit Hilfe des Schweißhilfselements zum zumindest teilweisen Aufschmelzen der Kontaktfläche;
(iv) Erstarren der Schmelze zum Herstellen der materialschlüssigen Verbindung zwischen den wenigstens zwei Fügepartnern. Die Schweißtemperatur wird über die Curietemperatur von ferromagnetischen Partikeln eingestellt, die in dem Schweißhilfselement enthalten sind.

Nach einen weiteren Aspekt der Erfindung wird die Verwendung einer biegeweichen Induktionsspuleneinrichtung zur Durchführung eines erfindungsgemäßen Verfahrens vorgeschlagen, wobei das Verfahren zur Herstellung eines Verbundkörpers aus wenigstens zwei thermoplastischen Fügepartnern dient.

Wenigstens einer der Fügepartner wird mit einem additiven Verfahren schichtweise gebildet und das Schweißhilfselement während des Aufbaus dieses Fügepartners auf den Fügepartner aufgebracht und mit weiterem Material des Fügepartners bedeckt.

Bei einem additiven Verfahren, wie dem 3D-Druckverfahren, wird ein Körper schichtweise aufgebaut. Ein solches Verfahren erlaubt es, beim Erzeugen einer Schicht eines Körpers lokal unterschiedliche Materialien aufzubringen.

Die wenigstens zwei thermoplastischen Fügepartner werden an wenigstens einer Kontaktfläche materialschlüssig miteinander verbunden.

Das Verfahren umfasst die Schritte (i) Anbringen eines induktiv aufheizbaren Schweißhilfselements auf eine äußere oder innere Oberfläche wenigstens eines der Fügepartner im Bereich der Kontaktfläche, wobei das Schweißhilfselement mit einem additiven Verfahren auf die Oberfläche aufgebracht wird; (ii) Zusammenführen der wenigstens zwei Fügepartner an der Kontaktfläche; (iii) induktives Erwärmen der Kontaktfläche mit Hilfe des Schweißhilfselements zum zumindest teilweisen Aufschmelzen der Kontaktfläche; (iv) Erstarren der Schmelze zum Herstellen der materialschlüssigen Verbindung zwischen den wenigstens zwei Fügepartnern.

Nach einem weiteren Aspekt der Erfindung wird ein Verbundkörper vorgeschlagen, umfassend wenigstens zwei thermoplastische Fügepartner, die an wenigstens einer Kontaktfläche materialschlüssig miteinander verbunden sind, wobei im Bereich der materialschlüssigen Verbindung induktiv erhitzbare Partikel angeordnet sind. Die Partikel können aus ferromagnetischem Material und/oder aus Kohlefaser gebildet sein. Vorzugsweise liegt im Bereich der materialschlüssigen Verbindung zwischen den Fügepartnern dasselbe thermoplastische Material wie bei den Fügepartnern vor, in dem die Partikel eingebettet sind.

Wenigstens einer der Fügepartner wird mit einem additiven Verfahren schichtweise gebildet und das Schweißhilfselement während des Aufbaus dieses Fügepartners auf den Fügepartner aufgebracht und mit weiterem Material des Fügepartners bedeckt.

Bei einem additiven Verfahren, wie dem 3D-Druckverfahren, wird ein Körper schichtweise aufgebaut. Ein solches Verfahren erlaubt es, beim Erzeugen einer Schicht eines Körpers lokal unterschiedliche Materialien aufzubringen.

Nach einer günstigen Ausgestaltung können die Fügepartner wenigstens einen gekrümmten Bereich aufweisen, der den Bereich der materialschlüssigen Verbindung aufweist.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft in schematischer Darstellung:
- Fig. 1: ein Schweißhilfselement in Form eines Filaments nach einem Ausführungsbeispiel der Erfindung;
- Fig. 2: perspektivisch den Auftrag eines Schweißhilfselements mittels 3D-Druck auf einen Fügepartner in einem Verfahrensschritt nach einem Ausführungsbeispiel der Erfindung;
- Fig. 3: perspektivisch ein Zusammenführen der Fügepartner in einem Verfahrensschritt nach einem Ausführungsbeispiel der Erfindung;
- Fig. 4: perspektivisch das Schweißen der Fügepartner in einem Verfahrensschritt nach einem Ausführungsbeispiel der Erfindung;
- Fig. 5: einen Verbundkörper nach einem Ausführungsbeispiel der Erfindung;
- Fig. 6: in Explosionsdarstellung einen Verbundkörper mit einem gekrümmten Bereich zur materialschlüssigen Verbindung mit einem Schweißhilfselement im gekrümmten Bereich;
- Fig. 7: ein Blockdiagramm eines erfindungsgemäßen Verfahrens.

### Ausführungsform der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsform zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

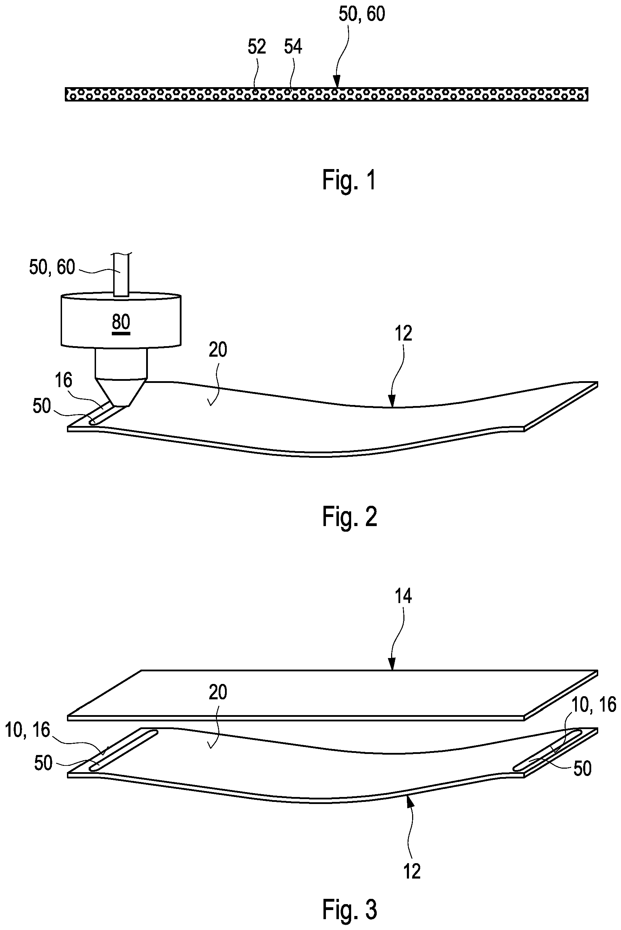

Figur 1 zeigt ein Schweißhilfselement 50 in Form eines Filaments 60 mit induktiv aufheizbaren Partikeln 52 in einer thermoplastischen Matrix 54 nach einem Ausführungsbeispiel der Erfindung.

Das Filament 60 weist beispielsweise eine Masse mit ferromagnetischen Partikeln 52 in der thermoplastischen Matrix 54 auf. Die ferromagnetischen Partikel 52 sind mit einem Gehalt in der Masse von mindestens 1 Gewichtsprozent und höchstens 25 Gewichtsprozent, vorzugsweise höchstens 20 Gewichtsprozent in der Masse vorgesehen.

Als ferromagnetisches Material günstig wird wenigstens eines aus der Gruppe von Chrom(IV)oxid, Goethit, Lepidokrokit, Ilmenit, Nickel, Magnetit, Hämatit, Eisen, Cobalt verwendet. Vorzugsweise wird nur ein Material davon eingesetzt, es ist jedoch auch denkbar, eine Mischung von verschiedenartigen ferromagnetischen Materialien vorzusehen.

Bei Einwirkung eines elektromagnetischen Induktionsfeldes können die Partikel 52 Energie aufnehmen und sich dabei schnell aufheizen. Wird deren Curietemperatur erreicht, sinkt die Energieaufnahme deutlich und die Temperatur steigt kaum mehr oder nur noch sehr langsam an.

Als thermoplastisches Material 54, in dem die Partikel 52 eingebettet sind, kann wenigstens eines aus der Gruppe von Polyetheretherketon (PEEK), Polyetherketonketon (PEKK), Polyphenylensulfid (PPS), Polyetherketon (PEK), Polyaryletherketon (PAEK), Polyetherimid (PEI), Polyamid (PA), Polyamid-6 (PA6), Polyamid-12 (PA12) verwendet werden.

Die Figuren 2 bis 5 zeigen in perspektivischer Darstellung mehrere Verfahrensschritte bei der Herstellung eines Verbundkörpers 100 nach einem Ausführungsbeispiel der Erfindung. Dabei zeigt Figur 2 den Auftrag eines Schweißhilfselements 50 mittels 3D-Druck auf eine Oberfläche 20 eines Fügepartners 12.

Das Schweißhilfselement 50 wird als Filament 60 in einem Extruder einer 3D-Druckeinrichtung 80 aufgeschmolzen und mit einer Düse in einem Auftragsbereich 16 auf die Oberfläche 20 des Fügepartners 12 aufgetragen. Der Fügepartner 12 weist eine gekrümmte Form mit geraden, ebenen Endstücken auf.

Figur 3 zeigt perspektivisch ein Zusammenführen der Fügepartner 12, 14, wobei an beiden Enden des Fügepartners 12 jeweils ein Streifen des Schweißhilfselements 50 in einem Auftragsbereich 16 aufgetragen ist. Im vorliegenden Beispiel wird das Schweißhilfselement 50 auf die äußere Oberfläche 20 des Fügepartners 12 aufgetragen. Der jeweilige Auftragsbereich 16 bildet dann die Kontaktfläche 10 zwischen den Fügepartner 12, 14.

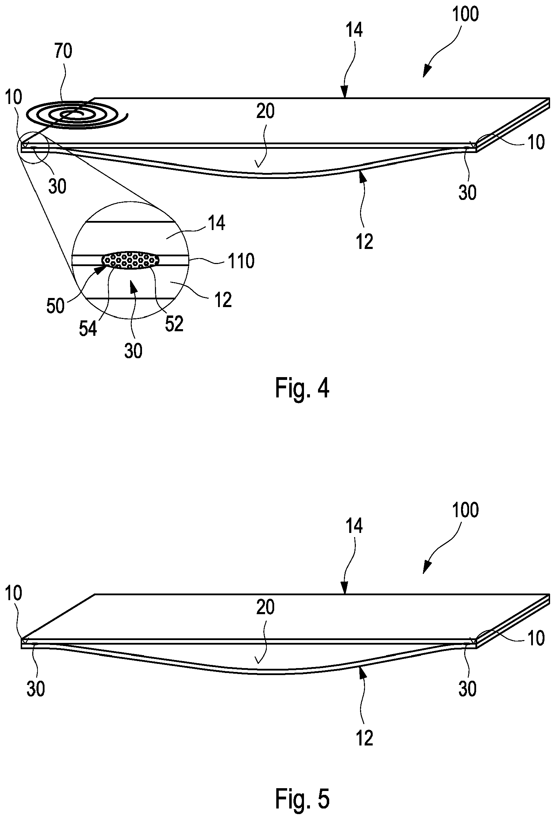

Sind die Fügepartner 12, 14 zueinander positioniert und an den Kontaktflächen 10 miteinander in Kontakt, erfolgt das Schweißen der Fügepartner, das in Figur 4 dargestellt ist. Figur 4 zeigt perspektivisch das Schweißen der Fügepartner 12, 14 zum Bilden des Verbundkörpers 100. An das jeweilige Ende des Fügepartners 12 mit den Schweißhilfselementen 50 wird gleichzeitig oder aufeinanderfolgend eine Induktionsspuleneinrichtung 70 angelegt.

Durch das mittels der Induktionsspuleneinrichtung 70 induzierte magnetische Feld werden die induktiv aufheizbaren Partikel 52 im Schweißhilfselement 50 schnell erhitzt, und die thermoplastische Matrix 54 schmilzt, ebenso das Material der Fügepartner 12, 14 im benachbarten Bereich. Dies ist im Ausschnitt 110 in Figur 5 angedeutet, in dem der Bereich 30 der materialschlüssigen Verbindung hervorgehoben ist.

Dort bildet sich der Bereich 30 der materialschlüssigen Verbindung zwischen den Fügepartnern 12, 14 nach Erstarren der Schmelze aus.

Figur 5 zeigt den dann gebildeten Verbundkörper 100 mit den Fügepartnern 12, 14.

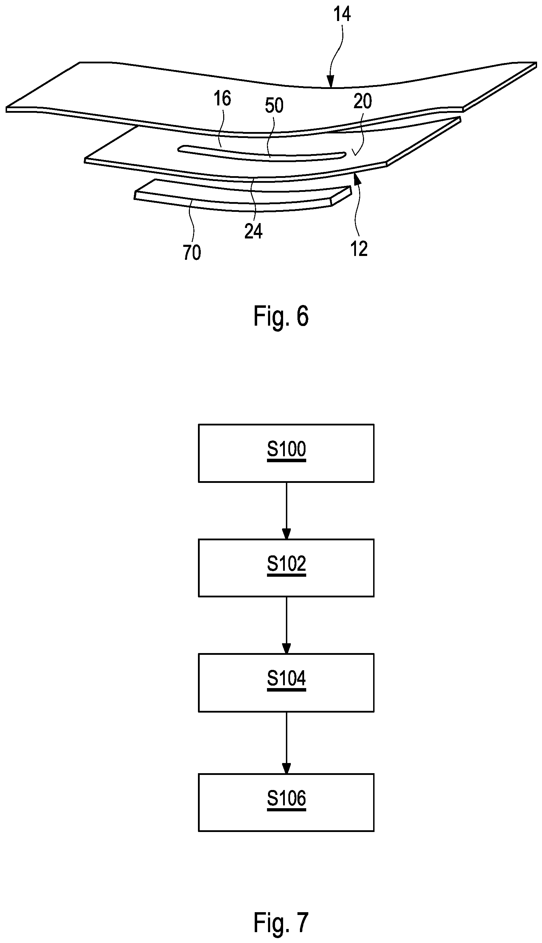

Figur 6 zeigt in Explosionsdarstellung einen Verbundkörper 100, bei dem der Auftragsbereich 16 in einem gekrümmten Bereich des Fügepartners 12 angeordnet ist. Durch eine biegeschlaffe Ausgestaltung der Induktionsspuleneinrichtung 70 kann sich diese der Form des Fügepartners 12 anpassen und einen gleichmäßigen Abstand zum Schweißhilfselement 50 einhalten.

Als thermoplastisches Material für die Fügepartner 12, 14, kann wenigstens eines aus der Gruppe von Polyetheretherketon (PEEK), Polyetherketonketon (PEKK), Polyphenylensulfid (PPS), Polyetherketon (PEK), Polyaryletherketon (PAEK), Polyetherimid (PEI), Polyamid (PA), Polyamid-6 (PA6), Polyamid-12 (PA12) verwendet werden. Vorteilhaft weisen beide Fügepartner 12, 14 dasselbe thermoplastische Material auf. Besonders bevorzugt weist das Schweißhilfselement 50 ebenfalls dieses thermoplastische Material auf.

Ebenso vorteilhaft können die Fügepartner 12, 14 - oder einer davon - mit einem additiven Verfahren hergestellt werden. Dabei wird der Fügepartner 12, 14 schichtweise aufgebaut. In diesem Fall ist es möglich, das Schweißhilfselement 50 nicht auf der äußeren Oberfläche 20, sondern auf einer inneren Oberfläche des Fügepartners 12, 14 aufzutragen und weitere Schichten des Fügepartners 12, 14 darüber anzuordnen. Das Schweißhilfselement 50 bildet dann einen vergrabenen Bereich im Fügepartner 12, 14.

Der Verfahrensablauf ist im Flussdiagramm in Figur 7 zusammengefasst. Das Aufbringen des Schweißhilfselements 50 auf einen Fügepartner 12 erfolgt in Schritt S100. In Schritt S102 werden die Fügepartner 12, 14 zusammengeführt und in Kontakt gebracht. Das induktives Aufheizen des Schweißhilfselements 50 erfolgt in Schritt S104, worauf die Matrix 54 des Schweißhilfselements 50 und der benachbarte Bereich 30 der materialschlüssigen Verbindung der Fügepartner 12, 14 aufschmelzen. In Schritt S106 erfolgt das Erstarren der Schmelze zur Herstellung der materialschlüssigen Verbindung zwischen den Fügepartnern 12, 14.

## Patentansprüche

1. Verfahren zur Herstellung eines Verbundkörpers (100) aus wenigstens zwei thermoplastischen Fügepartnern (12, 14), die an wenigstens einer Kontaktfläche (10) materialschlüssig miteinander verbunden werden, umfassend
Anbringen eines induktiv aufheizbaren Schweißhilfselements (50) auf eine äußere oder innere Oberfläche (20) wenigstens eines der Fügepartner (12) im Bereich der Kontaktfläche (10), wobei das Schweißhilfselement (50) mit einem additiven Verfahren auf die Oberfläche (20) aufgebracht wird;
Zusammenführen der wenigstens zwei Fügepartner (12, 14) an der Kontaktfläche (10);
induktives Erwärmen des Schweißhilfselements (50) zum zumindest teilweisen Aufschmelzen der Kontaktfläche (10), wobei eine Schweißtemperatur zum Verbinden der wenigstens zwei thermoplastischen Fügepartner (12, 14) mittels einer Curietemperatur von ferromagnetischen Partikeln eingestellt wird, welche in dem Schweißhilfselement (50) enthalten sind und
Erstarren der Schmelze zum Herstellen der materialschlüssigen Verbindung zwischen den wenigstens zwei Fügepartnern (12, 14), **dadurch gekennzeichnet, dass** wenigstens einer der Fügepartner (12) mit einem additiven Verfahren schichtweise gebildet wird und das Schweißhilfselement (50) während des Aufbaus des Fügepartners (12) auf den Fügepartner (12) aufgebracht und mit weiterem Material des Fügepartners (12) bedeckt wird.

2. Verfahren nach Anspruch 1, **dadurch gekennzeichnet, dass** das Schweißhilfselement (50) als Schmelze auf die Oberfläche (20) aufgebracht wird.

3. Verfahren nach einem der vorhergehenden Ansprüche, **dadurch gekennzeichnet, dass** das Schweißhilfselement (50) zum Auftragen als Filament (60) oder Granulat für einen 3d-Druckvorgang bereitgestellt wird.

4. Verfahren nach einem der vorhergehenden Ansprüche, **dadurch gekennzeichnet, dass** die Partikel (52) einen Gehalt in der Masse von mindestens 1 Gewichtsprozent und höchstens 25 Gewichtsprozent, vorzugsweise höchstens 20 Gewichtsprozent, aufweisen.

5. Verfahren nach einem der vorhergehenden Ansprüche, **dadurch gekennzeichnet, dass** die Masse Partikel aus Kohlefaser aufweist.

6. Verfahren nach einem der vorhergehenden Ansprüche, **dadurch gekennzeichnet, dass** die Fügepartner (12, 14) und das Schweißhilfselement (50) das gleiche thermoplastische Material aufweisen.

7. Verfahren nach einem der vorhergehenden Ansprüche, **dadurch gekennzeichnet, dass** das induktive Erwärmen mit einer biegeweichen Induktionsspuleneinrichtung (70) erfolgt, die sich der Form des Fügepartners (12) so anpasst, dass ein Abstand der Induktionsspuleneinrichtung (70) zum Schweißhilfselement (50) auch bei unebenen Fügekörpern weitgehend konstant gehalten werden kann.

8. Verfahren nach einem der vorhergehenden Ansprüche, **dadurch gekennzeichnet, dass** die Kontaktfläche (10), wenn sie in einem gekrümmten Bereich (24) der Fügepartner (12, 14) ausgebildet wird, der Kontur des gekrümmten Bereichs (24) folgt.

9. Verfahren nach einem der vorhergehenden Ansprüche, **dadurch gekennzeichnet, dass** als thermoplastisches Material wenigstens eines aus der Gruppe von Polyetheretherketon, Polyetherketonketon, Polyphenylensulfid, Polyetherketon, Polyaryletherketon, Polyetherimid, Polyamid, Polyamid-6, Polyamid-12 verwendet wird.

10. Verfahren nach einem der vorhergehenden Ansprüche, **dadurch gekennzeichnet, dass** als ferromagnetisches Material wenigstens eines aus der Gruppe von Chrom(IV)oxid, Goethit, Lepidokrokit, Ilmenit, Nickel, Magnetit, Hämatit, Eisen, Cobalt verwendet wird.

11. Verwendung eines Schweißhilfselements (50) umfassend eine thermoplastische Matrix (54) mit darin eingebetteten induktiv aufheizbaren Partikeln (52), insbesondere als Filament ausgebildet, zur Durchführung eines Verfahrens nach einem der vorhergehenden Ansprüche, wobei wenigstens einer der Fügepartner (12) mit einem additiven Verfahren schichtweise gebildet wird und das Schweißhilfselement (50) während des Aufbaus des Fügepartners (12) auf den Fügepartner (12) aufgebracht und mit weiterem Material des Fügepartners (12) bedeckt wird.

12. Verwendung einer biegeweichen Induktionsspuleneinrichtung (70) zur Durchführung eines Verfahrens nach einem der Ansprüche 1 bis 10, wobei wenigstens einer der Fügepartner (12) mit einem additiven Verfahren schichtweise gebildet wird und das Schweißhilfselement (50) während des Aufbaus des Fügepartners (12) auf den Fügepartner (12) aufgebracht und mit weiterem Material des Fügepartners (12) bedeckt wird.

13. Verbundkörper (100), der mit einem Verfahren nach einem der Ansprüche 1 bis 10 hergestellt ist, umfassend wenigstens zwei thermoplastische Fügepartner (12, 14), die an wenigstens einer Kontaktfläche (10) materialschlüssig miteinander verbunden sind, wobei im Bereich (30) der materialschlüssigen Verbindung induktiv aufheizbare Partikel (52) angeordnet sind,
wobei wenigstens einer der Fügepartner (12) mit einem additiven Verfahren schichtweise gebildet wird und das Schweißhilfselement (50) während des Aufbaus des Fügepartners (12) auf den Fügepartner (12) aufgebracht und mit weiterem Material des Fügepartners (12) bedeckt wird.

14. Verbundkörper (100) nach Anspruch 13, wobei die Fügepartner (12, 14) wenigstens einen gekrümmten Bereich (24) aufweisen, der den Bereich (30) der materialschlüssigen Verbindung aufweist.

## Claims

1. Method for producing a composite body (100) from at least two thermoplastic joining partners (12, 14) which are connected to one another in a material-fitting manner at at least one contact surface (10), comprising
applying a welding auxiliary element (50) which can be heated up in an inductive manner to an outer or inner surface (20) of at least one of the joining partners (12) in the region of the contact surface (10), wherein the welding auxiliary element (50) is applied to the surface (20) using an additive method;
joining the at least two joining partners (12, 14) at the contact surface (10); inductively heating the welding auxiliary element (50) for the at least partial melting of the contact surface (10), wherein a welding temperature for joining the at least two thermoplastic joining partners (12, 14) is set by means of a Curie temperature of ferromagnetic particles which are contained in the welding auxiliary element (50) and
solidifying the melt for producing the material-fitting connection between the at least two joining partners (12, 14), **characterised in that** at least one of the joining partners (12) is formed in layers using an additive method and the welding auxiliary element (50) is applied to the joining partner (12) during the construction of the joining partner (12) and is covered with further material of the joining partner (12).

2. Method according to claim 1, **characterised in that** the welding auxiliary element (50) is applied as a melt to the surface (20).

3. Method according to any of the preceding claims, **characterised in that** the welding auxiliary element (50) is provided for application as a filament (60) or granulate for a 3D printing procedure.

4. Method according to any of the preceding claims, **characterised in that** the particles (52) have a content in the compound of at least 1 wt% and maximum 25 wt%, preferably maximum 20 wt%.

5. Method according to any of the preceding claims, **characterised in that** the compound has particles made of carbon fiber.

6. Method according to any of the preceding claims, **characterised in that** the joining partners (12, 14) and the welding auxiliary element (50) have the same thermoplastic material.

7. Method according to any of the preceding claims, **characterised in that** the inductive heating is carried out using a pliable induction coil apparatus (70) which adapts to the shape of the joining partner (12) such that a distance from the induction coil apparatus (70) to the welding auxiliary element (50) can be kept mostly constant even in the case of uneven joining bodies.

8. Method according to any of the preceding claims, **characterised in that** when the contact surface (10) is formed in a curved region (24) of the joining partners (12, 14), it follows the contour of the curved region (24).

9. Method according to any of the preceding claims, **characterised in that** has a thermoplastic material at least one of the group of polyether ether ketone, polyether ketone ketone, polyphenylene sulfide, polyether ketone, polyarylether ketone, polyetherimide, polyamide, polyamide-6, polyamide-12 is used.

10. Method according to any of the preceding claims, **characterised in that** as a ferromagnetic material at least one of the group chromium (IV) oxide, goethite, lepidocrocite, ilmenite, nickel, magnetite, haematite, iron, cobalt is used.

11. Use of a welding auxiliary element (50) comprising a thermoplastic matrix (54) with particles (52) embedded therein which can be heated inductively, in particular in the form of filament, for carrying out a method according to any of the preceding claims, wherein at least one of the joining partners (12) is formed in layers using an additive method and the welding auxiliary element (50) is applied to the joining partner (12) during the construction of the joining partner (12) and is covered with further material of the joining partner (12).

12. Use of a pliable induction coil apparatus (70) for carrying out a method according to any of claims 1 to 10, wherein at least one of the joining partners (12) is formed in layers using an additive method and the welding auxiliary element (50) is applied to the joining partner (12) during the construction of the joining partner (12) and is covered with further material of the joining partner (12).

13. Composite body (100) which is produced using a method according to any of claims 1 to 10, comprising at least two thermoplastic joining partners (12, 14) which are connected to one another in a material-fitting manner at least one contact surface (10), wherein in the region (30) of the material-fitting connection are arranged particles (52) which can be heated inductively,
wherein at least one of the joining partners (12) is formed in layers using an additive process and the welding auxiliary element (50) is applied to the joining partner (12) during construction of the joining partner (12) and is covered with further material of the joining partner (12).

14. Composite body (100) according to claim 13, wherein the joining partners (12, 14) have at least one curved region (24) which has the region (30) of the material-fitting connection.

## Revendications

1. Procédé de fabrication d'un corps composite (100) à partir d'au moins deux pièces à assembler thermoplastiques (12, 14) qui sont connectés l'un à l'autre par liaison de matière au niveau au moins d'une surface de contact (10), comprenant
l'application d'un élément auxiliaire de soudage (50) pouvant être chauffé par induction sur une surface extérieure ou intérieure (20) d'au moins une des pièces à assembler (12) dans la zone de la surface de contact (10), dans lequel l'élément auxiliaire de soudage (50) est appliqué sur la surface (20) par un procédé additif ;
la réunion des au moins deux pièces à assembler (12, 14) au niveau de la surface de contact (10) ;
le chauffage par induction de l'élément auxiliaire de soudage (50) pour faire fondre au moins partiellement la surface de contact (10), dans lequel une température de soudage est réglée pour connecter les au moins deux pièces à assembler thermoplastiques (12, 14) au moyen d'une température de Curie de particules ferromagnétiques qui sont contenues dans l'élément auxiliaire de soudage (50) et
la solidification de la fonte pour réaliser la connexion par liaison de matière entre les au moins deux pièces à assembler (12, 14), **caractérisé en ce qu'**au moins une des pièces à assembler (12) est formé en couches par un procédé additif et l'élément auxiliaire de soudage (50) est appliqué sur la pièce à assembler (12) pendant la construction de la pièce à assembler (12) et est recouvert d'un matériau supplémentaire de la pièce à assembler (12).

2. Procédé selon la revendication 1, **caractérisé en ce que** l'élément auxiliaire de soudage (50) est appliqué en tant que fonte sur la surface (20).

3. Procédé selon l'une quelconque des revendications précédentes, **caractérisé en ce que** l'élément auxiliaire de soudage (50) est prévu pour être appliqué en tant que filament (60) ou granulé pour un processus d'impression 3D.

4. Procédé selon l'une quelconque des revendications précédentes, **caractérisé en ce que** les particules (52) présentent une teneur dans la masse d'au moins 1 % en poids et d'au plus 25 % en poids, de préférence d'au plus 20 % en poids.

5. Procédé selon l'une quelconque des revendications précédentes, **caractérisé en ce que** la masse présente des particules de fibre de carbone.

6. Procédé selon l'une quelconque des revendications précédentes, **caractérisé en ce que** les pièces à assembler (12, 14) et l'élément auxiliaire de soudage (50) présentent le même matériau thermoplastique.

7. Procédé selon l'une quelconque des revendications précédentes, **caractérisé en ce que** le chauffage par induction s'effectue avec un appareil de bobine d'induction (70) souple qui s'adapte à la forme de la pièce à assembler(12), de sorte qu'une distance entre l'appareil de bobine d'induction (70) et l'élément auxiliaire de soudage (50) peut être maintenue largement constante, même en cas de pièces à assembler inégales.

8. Procédé selon l'une quelconque des revendications précédentes, **caractérisé en ce que** la surface de contact (10), lorsqu'elle est formée dans une zone incurvée (24) des pièces à assembler (12, 14), suit le contour de la zone incurvée (24).

9. Procédé selon l'une quelconque des revendications précédentes, **caractérisé en ce qu'**au moins un parmi le groupe constitué par le polyétheréthercétone, le polyéthercétonecétone, le polysulfure de phénylène, le polyéthercétone, le polyaryléthercétone, le polyétherimide, le polyamide, le polyamide-6, le polyamide-12 est utilisé en tant que matériau thermoplastique.

10. Procédé selon l'une quelconque des revendications précédentes, **caractérisé en ce qu'**au moins un parmi le groupe constitué par l'oxyde de chrome (IV), la goethite, la lépidocrocite, l'ilménite, le nickel, la magnétite, l'hématite, le fer, le cobalt est utilisé en tant que matériau ferromagnétique.

11. Utilisation d'un élément auxiliaire de soudage (50) comprenant une matrice thermoplastique (54) dans laquelle des particules (52) pouvant être chauffées par induction sont incorporées, en particulier en tant que filament, pour la mise en oeuvre d'un procédé selon l'une quelconque des revendications précédentes, dans laquelle au moins une des pièces à assembler (12) est formé en couches par un procédé additif et l'élément auxiliaire de soudage (50) est appliqué sur la pièce à assembler (12) pendant la construction de la pièce à assembler (12) et est recouvert d'un matériau supplémentaire de la pièce à assembler (12).

12. Utilisation d'un appareil de bobine d'induction (70) souple pour la mise en oeuvre d'un procédé selon l'une quelconque des revendications 1 à 10, dans laquelle au moins une des pièces à assembler (12) est formé en couches par un procédé additif et l'élément auxiliaire de soudage (50) est appliqué sur la pièce à assembler (12) pendant la construction de la pièce à assembler (12) et est recouvert d'un matériau supplémentaire de la pièce à assembler (12).

13. Corps composite (100) qui est fabriqué avec un procédé selon l'une quelconque des revendications 1 à 10, comprenant au moins deux pièces à assembler thermoplastiques (12, 14) qui sont connectés l'un à l'autre par liaison de matière au niveau au moins d'une surface de contact (10), dans lequel des particules (52) pouvant être chauffées par induction sont disposées dans la zone (30) de la connexion par liaison de matière,
dans lequel au moins une des pièces à assembler (12) est formé en couches par un procédé additif et l'élément auxiliaire de soudage (50) est appliqué sur la pièce à assembler (12) pendant la construction de la pièce à assembler (12) et est recouvert d'un matériau supplémentaire de la pièce à assembler (12).

14. Corps composite (100) selon la revendication 13, dans lequel les pièces à assembler (12, 14) présentent au moins une zone incurvée (24) qui présente la zone (30) de la connexion par liaison de matière.
